# DEMANDE DE BREVET EUROPEEN

(11) **EP 1 637 989 A1**
(43) Date de publication de la demande: **22.03.2006**
(21) Numéro de dépôt: 05291826.5
(22) Date de dépôt: 02.09.2005
(51) Int. Cl.: G06F 7/10, G06F 17/30

(54) **Procédé et système de séparation de comptes de données personnelles**

(30) Priorité: 15.09.2004 FR 0409787
(71) Demandeur: FRANCE TELECOM, 75015 Paris (FR)
(72) Inventeur: Maitret, Bénédicte, 75017 Paris (FR); Gruson, Manuel, 75014 Paris (FR); Leonnec, Jean-Yves, 92130 Issy les Moulineaux (FR)
(74) Mandataire: Blot, Philippe Robert Emile

(57) **Abrégé**

Ce procédé de séparation d'un compte de données personnelles unifié, associé avec au moins deux services de données personnelles, comprend :
- une étape (40) d'accès audit compte de données personnelles (128) unifié ;
- une étape (50) de requête de séparation en au moins deux comptes de données personnelles associés chacun à des services de données personnelles différents ; et
- une étape (60) de répartition des éléments dudit compte de données personnelles unifié entre lesdits au moins deux comptes de données personnelles.

L'invention concerne également un système de séparation.

## Description

La présente invention concerne un procédé de séparation de comptes de données personnelles.

Sur les réseaux de transfert d'informations actuels, il existe un nombre important de services de données personnelles, tels que des services de carnet d'adresses, d'agenda et de tâches, permettant à des utilisateurs de mémoriser des informations personnelles sous la forme d'éléments dans des comptes de données personnelles.

Les utilisateurs accèdent et/ou utilisent ces données personnelles en se connectant sur un service de données personnelles et en s'identifiant par exemple au moyen de code d'identification. Les données personnelles sont ensuite utilisées et/ou créées automatiquement au cours de l'utilisation du service ou directement par l'utilisateur.

A titre d'exemple, des services de données personnelles existent sur les portails d'accès Internet, les services de messagerie, les services d'achat en ligne, les services d'accès à des réseaux à partir d'équipements de téléphonie mobile.

Les comptes de données personnelles des différents services sont totalement distincts les uns des autres, de sorte que des modifications sur un compte de données personnelles sont inopérantes pour un autre compte de données personnelles du même utilisateur. Il est donc nécessaire de tenir les comptes de données personnelles récentes manuellement afin de s'assurer que toutes les informations accessibles sont récentes.

Afin de résoudre ce problème, l'utilisation d'un unique identifiant pour accéder à une pluralité de services a été développée.

Cette solution pose toutefois un important problème de sécurité et de confidentialité, un unique code d'identification permettant l'accès à tous les comptes de données personnelles et toutes les informations étant accessibles à partir de tous les services.

Une autre solution réside dans une gestion fédérative des identifiants, permettant à chaque service d'accéder aux comptes de données personnelles des autres services.

Cette solution pose toutefois un problème de convivialité puisque l'utilisateur doit assurer la gestion des différents comptes de données personnelles et entraîne une fédération des identifiants, tous étant équivalents, ce qui pose un problème de sécurité.

Le but de la présente invention est de résoudre les problèmes de convivialité et de sécurité en définissant un procédé de séparation de comptes de données personnelles conjuguant convivialité, sécurité et confidentialité.

A cet effet, l'invention a pour objet un procédé de séparation d'un compte de données personnelles unifié associé avec au moins deux services de données personnelles, caractérisé en ce qu'il comprend :
- une étape d'accès audit compte de données personnelles ;
- une étape de requête de séparation en au moins deux comptes de données personnelles associés chacun à des services de données personnelles différents ; et
- une étape de répartition des éléments dudit compte de données personnelles unifié entre lesdits au moins deux comptes de données personnelles.

Selon d'autres caractéristiques du procédé de l'invention :
- l'étape de répartition consiste à dupliquer le compte de données personnelles unifié sur les comptes de données personnelles ;
- l'étape de répartition consiste à transférer les données du compte de données personnelles unifié vers un seul des deux comptes de données personnelles et à supprimer le contenu de l'autre de ces deux comptes de données personnelles ;
- le procédé comporte en outre une étape de suppression dudit compte de données personnelles unifié après l'étape de répartition ;
- le compte de données personnelles unifié est créé à partir d'un procédé d'unification d'au moins deux comptes de données personnelles, chacun associé avec au moins un service de données personnelles, comprenant :
   - une étape d'accès à un premier compte de données personnelles ;
   - une étape d'émission d'une requête d'unification dudit premier compte de données personnelles avec au moins un second compte de données personnelles cible; et
   - une étape d'unification dudit premier compte avec le ou lesdits comptes cibles pour former un compte de données personnelles unifié associé à tous les services associés initialement audit premier compte et à chaque compte cible.

L'invention concerne également un système de séparation d'un compte de données personnelles unifié en au moins deux comptes de données personnelles, chacun associé avec au moins un service de données personnelles, caractérisé en ce qu'il comprend des moyens de séparation dudit compte de données personnelles unifié, comprenant des moyens d'émission d'une requête de séparation dudit compte de données personnelles unifié, des moyens de répartition des éléments dudit compte de données personnelles unifié entre lesdits au moins deux comptes de données personnelles.

L'invention sera mieux comprise à la lecture de la description qui va suivre, donnée uniquement à titre d'exemple et faite en se référant aux dessins annexés, sur lesquels :
- la Fig.1A représente un organigramme général du procédé d'unification de l'invention ;
- la Fig.1B représente un organigramme général du procédé de séparation d'un compte unique de l'invention ; et
- la Fig.2 représente un schéma synoptique d'un système mettant en oeuvre le procédé de l'invention.

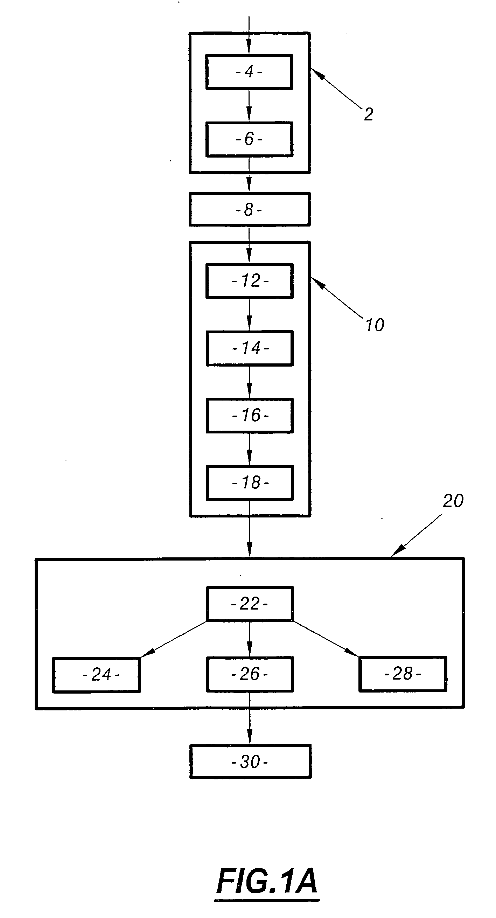

La Fig.1A représente un organigramme du procédé d'unification d'au moins deux comptes de données personnelles selon l'invention.

L'exemple décrit du procédé de l'invention concerne le cas de deux comptes de données personnelles associés chacun à un service de données personnelles accessibles au travers du réseau Internet, par exemple.

Bien entendu, le procédé de l'invention peut être mis en oeuvre avec plus de deux comptes de données personnelles et avec d'autres types de réseaux que le réseau Internet.

Le procédé d'unification selon l'invention débute par une étape 2 d'accès à un premier compte de données personnelles. Cette étape 2 comporte tout d'abord une sous-étape 4 d'accès à un service de données personnelles tel que par exemple un service de messagerie Internet. La sous-étape 4 est suivie d'une sous-étape 6 d'identification ou d'authentification de l'utilisateur sur ce service, par exemple grâce à la saisie d'un nom d'utilisateur et d'un mot de passe associé, afin d'accéder au premier compte de données personnelles.

Le procédé comporte ensuite une étape 8 d'émission d'une requête d'unification du premier compte avec le second compte dit « compte cible ». cette étape d'émission d'une requête d'unification est réalisée, par exemple, grâce à la présence au niveau de l'interface du premier compte de données personnelles, d'un bouton permettant d'émettre une requête d'unification et entraînant la saisie d'informations permettant de déterminer le compte de données personnelles cible de la requête d'unification.

Avantageusement, l'étape 8 d'émission d'une requête est suivie d'une étape 10 de vérification de la validité de cette requête d'unification.

Dans le mode de réalisation décrit, cette étape 10 de vérification de la validité de la requête comprend une sous-étape 12 d'émission automatique d'un message à destination du compte cible, suivie d'une sous-étape 14 d'accès à un service de données personnelles permettant l'accès au compte cible et d'une sous-étape 16 d'authentification de l'utilisateur auprès de ce service. Les sous-étapes 14 et 16 permettent donc la collecte des informations contenues dans le message émis automatiquement. Après l'accès au compte cible, le procédé comprend une sous-étape 18 de réponse au message automatiquement envoyé lors de la sous-étape 12, cette sous-étape 18 constituant une validation de la requête d'unification.

L'ensemble de ces sous-étapes 12 à 18 permet ainsi de s'assurer que l'utilisateur du compte cible en autorise l'utilisation, afin d'éviter l'utilisation ou l'unification avec un compte de données personnelles sans l'accord de son utilisateur.

L'étape 10 de vérification de la validité de la requête, est suivie d'une étape 20 de fusion du premier compte de données personnelles et du compte cible des données personnelles, pour former un nouveau compte de données personnelles, dit « compte unifié », associé à tous les services associés au premier compte et au compte cible.

Ce compte unifié est accessible à la fois avec l'identifiant associé initialement au premier compte de données personnelles et avec l'identifiant associé au compte de données personnelles cible.

L'étape 20 d'unification débute par une sous-étape 22 de sélection par l'utilisateur d'une stratégie d'unification. Dans le mode de réalisation décrit, trois stratégies sont proposées pour la gestion des éléments identiques : une fusion complète des éléments des deux comptes de données personnelles correspondant à la sous-étape 24, une détection automatique des doublons mise en oeuvre lors d'une sous-étape 26 et une gestion des doublons réalisée directement par l'utilisateur d'une sous-étape 28 pour sélectionner à chaque détection de doublons, si les deux éléments doivent être conservés ou l'un d'entre eux doit être détruit.

Avantageusement, l'étape 20 d'unification des comptes de données personnelles dans le compte unifié, est suivie d'une étape 30 de suppression du premier compte de données personnelles ainsi que du compte cible, de manière à ne conserver que le compte de données personnelles unifié.

Ainsi, grâce au procédé d'unification de l'invention, l'utilisateur sélectionne exactement les comptes de données personnelles qui sont unifiés et dispose ensuite d'un compte de données personnelles unifié accessible à partir d'une pluralité de services.

A titre d'exemple, un utilisateur peut unifier des comptes de données personnelles d'adresses afin de créer un compte unifié accessible à partir d'un portail d'accès Internet et d'un portail d'accès mobile, toute modification faite depuis l'un de ces services sur les données d'adresses étant visible depuis l'autre.

Bien entendu, d'autres modes de réalisation du procédé de l'invention peuvent être envisagés, notamment au niveau de l'accès aux différents comptes de données personnelles et au niveau de la vérification de la validité de la requête d'unification. En particulier, la vérification peut notamment recourir à une vérification d'identification ou à l'utilisation d'un système fédératif.

Par ailleurs, l'unification peut viser des comptes de données personnelles de différents utilisateurs qui souhaitent mettre en commun certaines de leurs ressources.

Ainsi, deux utilisateurs de messagerie peuvent unifier leurs carnets d'adresses grâce au procédé de l'invention tout en conservant chacun son protocole d'identification et en limitant l'unification à ces seules données personnelles de carnet d'adresses, toutes les autres données étant protégées de manière classique.

Ceci permet d'accroître la sécurité et la convivialité, l'identifiant d'un utilisateur donné n'étant reconnu que sur son propre service, mais le compte de données personnelles unifié étant accessible depuis tous les services.

Enfin, d'autres solutions d'unification peuvent être envisagées. Il est en effet possible de créer un nouveau compte destiné à devenir le compte de données unifié tout en conservant les comptes de données personnelles d'origine. De même, il est possible d'enrichir un des comptes d'origine avec les données du ou des autres comptes afin d'en faire le compte de données personnelles unifié, et ce, en conservant ou en détruisant le ou les comptes d'origine.

Ainsi, grâce à ce procédé de l'invention, l'utilisateur décide quels sont les comptes de données personnelles qui doivent être unifiés et, grâce au compte unique, il peut accéder à toutes les données à partir de tous les services pour lesquels les comptes de données personnelles ont été fusionnés et ce, sans changer son utilisation des services.

Cette invention permet donc de conserver différents domaines d'utilisation pour l'utilisateur qui accède de manière distincte à chaque service tout en lui permettant de ne gérer qu'un seul compte de données personnelles.

En variante, l'étape de vérification de la validité de la requête s'effectue sur une connexion existante entre les différents comptes par un dialogue direct.

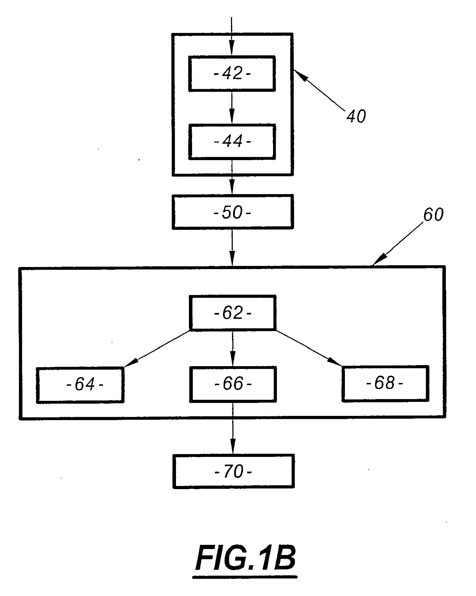

La Fig.1B représente un organigramme du procédé de séparation de comptes de données personnelles correspondant au procédé d'unification décrit en référence à la Fig.1A.

Ce procédé débute par une étape 40 d'accès à un compte de données unifié, cette étape comprenant par exemple une sous-étape 42 d'accès à un service de données personnelles suivie d'une sous-étape 44 d'identification ou d'authentification de l'utilisateur à l'aide d'un identifiant associé au service.

Cette étape 40 est suivie d'une étape 50 d'émission d'une requête de séparation du compte de données personnelles unifié, laquelle est suivie d'une étape 60 de séparation.

Différentes stratégies de séparation peuvent être envisagées et proposées à un utilisateur lors d'une sous-étape 62 de sélection de la stratégie de séparation.

Ces différentes stratégies regroupent par exemple une duplication complète du compte de données unifié en deux comptes de données personnelles associé chacun à un service différent lors d'une sous-étape 64, une séparation unilatérale comprenant la copie de tous les éléments du compte de données personnelles unifié sur un compte de données personnelles et la création d'un autre compte de données personnelles vide lors d'une sous-étape 66, et une séparation manuelle des différents éléments du compte de données personnelles unifiés et leur affectation vers l'un ou l'autre des comptes de données personnelles associé aux différents services, lors d'une sous-étape 68.

Dans le cas où les comptes de données personnelles initiaux ont été conservés, la stratégie de séparation mise en oeuvre au cours de l'étape 60 peut intégrer une comparaison entre les éléments compris dans les comptes de données personnelles existants déjà et les éléments du compte unifié.

A l'inverse, dans le cas où les comptes de données personnelles qui ont été unifiés pour former le compte de données unifié ont été détruits, il est nécessaire de les recréer.

En variante, lors de l'unification, chaque élément du compte de données personnelles unifié a été associé à une information d'origine permettant de déterminer le compte de données personnelles où l'élément a été prélevé.

Lors de la séparation, cette information d'origine est utilisée pour répartir les différents éléments.

Une solution similaire est envisagée avec l'utilisation d'une information, pour chaque élément du compte de données personnelles unifié, permettant de déterminer l'utilisateur ou le service qui a créé cet élément, cette information étant utilisée au moment de l'étape 60 de séparation.

L'étape 60 est suivie d'une étape 70 de suppression du compte de données personnelles unifié, de sorte, que seuls les comptes de données personnelles spécifiques à chacun des services existent à l'issue du procédé de séparation de l'invention.

Par exemple, un utilisateur sépare ainsi des données de taches entre deux comptes de données personnelles, de sorte que des modifications sur un compte à partir d'un service seront sans effet sur l'autre compte accessible au travers d'un autre service.

Bien entendu, d'autres variantes et modes de réalisation du procédé de séparation de l'invention peuvent être envisagés et notamment d'autres stratégies de séparation ainsi que d'autres méthodes d'accès au compte de données unifié, peuvent être développées.

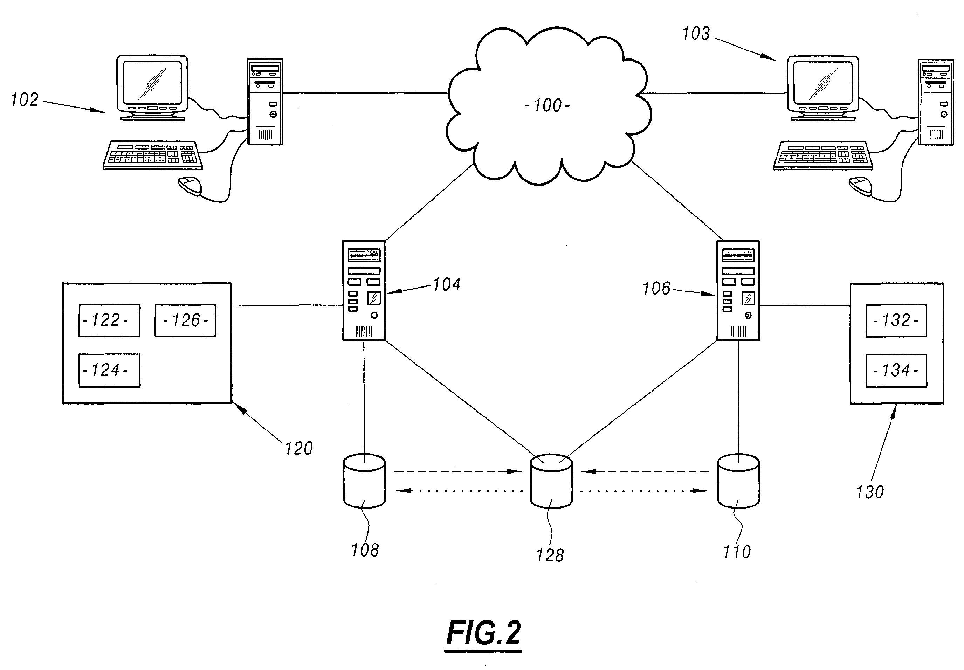

Sur la Fig.2, on a représente de manière schématique un système d'unification et de séparation de comptes de données personnelles mettant en oeuvre les procédés d'unification et de séparation de l'invention.

Ce système est organisé autour d'un réseau de transfert d'informations tel que le réseau Internet 100, auquel des utilisateurs ont accès à partir d'ordinateurs personnels 102, 103 ou tout autre type de terminaux adaptés, tels que par exemple des téléphones portables équipés de fonctions d'accès à Internet.

Différents services de données personnelles sont accessibles au travers du réseau 100 pour les utilisateurs des terminaux 102 et 103 et notamment des services de données personnelles représentés schématiquement par les serveurs 104 et 106, chacun associé à une base de données comportant un compte de données personnelles 108 et 110.

De manière classique, les différents éléments du système sont adaptés pour communiquer entre eux à l'aide de programmes et d'équipements électroniques connus et comprenant les différents éléments nécessaires à leur fonctionnement.

Notamment, les serveurs 104 et 106 sont adaptés pour vérifier respectivement l'identité des utilisateurs des terminaux 102 et 103 grâce à des moyens classiques d'identification d'un utilisateur et pour gérer les bases de données 108 et 110.

Le système décrit comprend en outre sur au moins l'un des serveurs tel que le serveur 104, des moyens 120 d'unification des comptes de données personnelles, adaptés pour mettre en oeuvre le procédé d'unification décrit en référence à la Fig.1A.

Plus particulièrement, les moyens 120 comprennent une unité 122 d'introduction d'une requête d'unification permettant l'identification d'au moins un second compte de données personnelles à unifier dit « compte cible ». Cette unité 122 est adaptée pour mettre en oeuvre l'étape 8 d'émission d'une requête d'unification par un utilisateur.

Les moyens 120 comprennent également une unité 124 de vérification de la validité de la requête permettant de mettre en oeuvre l'étape 10 du procédé décrit en référence à la Fig.1A.

Par exemple, l'unité 124 est adaptée pour émettre automatiquement un message à l'intention du serveur 106 qui gère le compte de données cible 110, ce message ayant une durée de vie courte et étant prévu pour renvoyer automatiquement une information dès qu'il est lu, ou encore, ce message comprenant une information confidentielle à laquelle il est nécessaire d'avoir accès pour pouvoir ensuite continuer la procédure d'unification.

Enfin, les moyens 120 comportent une unité 126 d'unification chargée de collecter les éléments des comptes de données personnelles 108 et 110 en fonction de la stratégie retenue, afin ensuite de former le compte de données unifié 128.

Avantageusement, au moins un service de données personnelles tel que le service représenté par le serveur 106, comporte des moyens 130 de séparation d'un compte de données personnelles unifié.

Ces moyens 130 comprennent une unité 132 de saisie d'une requête de séparation et une unité 134 de séparation.

En fonctionnement, l'utilisateur du terminal 102 se connecte au service de données personnelles représenté par le serveur 104 au travers du réseau 100, mettant ainsi en oeuvre l'étape 2 du procédé représenté sur la Fig.1A.

L'utilisateur requiert ensuite l'unification du compte de données personnelles 108 avec le compte de données personnelles 110 grâce à l'unité 122.

L'unité 124 de vérification de la validité de la requête envoie alors un message vers le compte cible 110 à partir du compte de données personnelles 108. Ce message est collecté par l'utilisateur du terminal 103 directement au travers du service de données personnelles représenté par le serveur 106, après une authentification adéquate. La lecture de ce message est suivie de l'envoi d'un message d'accord pour poursuivre l'unification.

A l'aide des informations d'identification contenues dans le message d'accord, l'utilisateur du terminal 102 peut poursuivre la procédure d'unification.

L'unité 124 met ainsi en oeuvre l'étape 10 du procédé de la Fig.1A.

La validité de la requête étant vérifiée, l'unité 126 procède à l'unification des comptes de données personnelles 108 et 110, pour former le compte de données personnelles 128 en mettant en oeuvre la stratégie retenue par l'utilisateur ou une stratégie définie par défaut.

La création du compte de données personnelles unifié 128 est réalisée grâce aux moyens classiques de gestion des bases de données compris dans les différents services de données personnelles.

Cette création permet d'intégrer dans le compte de données personnelles unifié 128, toutes les informations de comptes de données personnelles 108 et 110 comme représentées en traits discontinus.

Le compte de données unifié ainsi créé, est accessible directement à partir de chacun des services de données personnelles représentés par les serveurs 104 et 106.

Par ailleurs, l'utilisateur du terminal 103 peut mettre en oeuvre les moyens 130 de séparation du compte de données unifié, en se connectant à un service de données personnelles ayant accès au compte de données unifié 128, tel que le service représenté par le serveur 106, en mettant en oeuvre l'étape 40 du procédé représenté sur la Fig. 1B.

L'utilisateur émet alors une requête de séparation du compte de données unifié 128, au travers de l'unité 132 mettant ainsi en oeuvre l'étape 50 du procédé de la Fig.1B.

L'unité 134 procède ensuite à la séparation du compte de données personnelles unifié 128 en mettant en oeuvre l'étape 60 de procédé de la Fig.1B.

Dans le cas où les comptes de données personnelles 108 et 110 n'ont pas été détruits lors de la création du compte de données unifié 128, l'unité 134 répartie les éléments du compte de données unifié 128 entre les comptes de données 108 et 110 en fonction de la stratégie retenue, par exemple en dupliquant le compte de données unifié 128 sur les comptes de données 108 et 110 ou encore en transférant toutes les données unilatéralement sur un seul des comptes et en supprimant tout le contenu de l'autre.

A l'inverse, si les comptes des données 108 et 110 ont été détruits lors de la création du compte de données unifié 128, ces comptes doivent être recréés avoir de pouvoir transférer les informations.

Ce transfert d'informations est représenté sur la Fig.2 en pointillés.

Bien entendu, d'autres modes de réalisation du système de l'invention peuvent envisagés.

Notamment, les moyens 120 d'unification et/ou 130 de séparation peuvent être intégrés dans un autre serveur, accessible à partir des services de données personnelles.

Les différents moyens et les différentes unités de ce système sont généralement formés de programmes et logiciels spécifiques ou d'éléments de programmes et éléments de logiciels comportant des instructions spécifiques visant à la mise en oeuvre des différentes étapes des procédés de l'invention.

## Revendications

1. Procédé de séparation d'un compte de données personnelles unifié associé avec au moins deux services de données personnelles, **caractérisé en ce qu'**il comprend :
- une étape (40) d'accès audit compte de données personnelles (128) unifié ;
- une étape (50) de requête de séparation en au moins deux comptes de données personnelles associés chacun à des services de données personnelles différents ; et
- une étape (60) de répartition des éléments dudit compte de données personnelles unifié entre lesdits au moins deux comptes de données personnelles.

2. Procédé selon la revendication 1, **caractérisé en ce que** l'étape (60) de répartition consiste à dupliquer le compte de données personnelles unifié (128) sur les comptes de données personnelles (108, 110).

3. Procédé selon la revendication 1, **caractérisé en ce que** l'étape (60) de répartition consiste à transférer les données du compte de données personnelles unifié vers un seul des deux comptes de données personnelles et à supprimer le contenu de l'autre de ces deux comptes de données personnelles.

4. Procédé selon l'une quelconque des revendications 1 à 3, **caractérisé en ce qu'**il comporte en outre une étape (70) de suppression dudit compte de données personnelles unifié (128) après l'étape (60) de répartition.

5. Procédé selon l'une quelconque des revendications 1 à 4, **caractérisé en ce que** le compte de données personnelles unifié est créé à partir d'un procédé d'unification d'au moins deux comptes de données personnelles (108, 110), chacun associé avec au moins un service de données personnelles (104, 106), ledit procédé d'unification comprenant :
- une étape (2) d'accès à un premier compte de données personnelles (108) ;
- une étape (8) d'émission d'une requête d'unification dudit premier compte de données personnelles avec au moins un second compte de données personnelles cible (110) ; et
- une étape (20) d'unification dudit premier compte (108) avec le ou lesdits comptes cibles (110) pour former un compte de données personnelles unifié (128) associé à tous les services associés initialement audit premier compte et à chaque compte cible.

6. Système de séparation d'un compte de données personnelles unifié (128) en au moins deux comptes de données personnelles, chacun associé avec au moins un service de données personnelles (104, 106), **caractérisé en ce qu'**il comprend des moyens (128) de séparation dudit compte de données personnelles unifié (128), comprenant des moyens (132) d'émission d'une requête de séparation dudit compte de données personnelles unifié (128) et des moyens (134) de répartition des éléments dudit compte de données personnelles unifié (128) entre lesdits au moins deux comptes de données personnelles (108, 110)..
